(19) Europäisches Patentamt
European Patent Office
Office européen des brevets

(11) Publication number: **0 271 235 B1**

# (12) EUROPEAN PATENT SPECIFICATION

(45) Date of publication of patent specification: **08.09.93**

(51) Int. Cl.[5]: **C08L 23/12**, C08K 5/00, C08L 23/02, //(C08K5/00,5:13, 5:18)

(21) Application number: **87310150.5**

(22) Date of filing: **18.11.87**

## (54) Polypropylene stabilized against oxidative degradation with mixtures of aralkyl-substituted diarylamines and sterically hindered phenols.

(30) Priority: **11.12.86 US 941479**

(43) Date of publication of application:
**15.06.88 Bulletin 88/24**

(45) Publication of the grant of the patent:
**08.09.93 Bulletin 93/36**

(84) Designated Contracting States:
**AT BE CH DE ES FR GB GR IT LI LU NL SE**

(56) References cited:
**US-A- 3 505 225**
**US-A- 3 979 180**
**US-A- 4 341 677**
**US-A- 4 420 579**

**CHEMICAL ABSTRACTS, vol. 93, no. 14, 6th October 1980, page 53, abstract no. 133555b, Columbus, Ohio, US; & JP-A-80 65 245 (DAINICHI NIPPON CABLES, LTD) 16-05-1980**

**PATENTS ABSTRACTS OF JAPAN, vol. 8, no. 212 (C-244)[1649], 27th September 1984; & JP-A-59 98 148 (HITACHI DENSEN K.K.) 06-06-1984**

(73) Proprietor: **UNIROYAL CHEMICAL COMPANY, Inc.**
**World Headquarters**
**Middlebury Connecticut 06749(US)**

(72) Inventor: **Chucta, Thomas M.**
**151 Andrew Avenue Apartment 148**
**Naugatuck Connecticut 06770(US)**

(74) Representative: **Browne, Robin Forsythe, Dr. et al**
**Urquhart-Dykes & Lord Tower House Merrion Way**
**Leeds LS2 8PA West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 271 235 B1

## Description

This invention relates to polyolefin homopolymers, copolymers and their blends stabilized against oxidative degradation with a combination of at least one aralkyldiarylamine and at least one sterically hindered phenol.

Aralkyl-substituted diarylamines such as 4,4′-bis(alpha,alpha-dimethylbenzyl)diphenylamine (NAUGARD 445, Uniroyal Chemical) and their use as antioxidants for a variety of polymeric materials are known from U.S. Patent Nos. 3,452,956 and 3,505,225.

Sterically hindered phenols constitute another known class of antioxidant materials. Antioxidant compositions containing both an amine component and a sterically hindered phenol component, with and without other ingredients, are also known.

Thus, U.S. Patent No. 3,304,283 discloses an antioxidant composition for mono-olefinic polymers such as polypropylene containing at least one aromatic phenolic thioether, diaryl thioether, aliphatic disulfide, aromatic disulfide, aromatic mercaptan, aliphatic mercaptan and/or aliphatic thiuramdisulfide in combination with at least one biphenol and/or aromatic amine.

U.S. Patent No. 3,432,578 discloses the stabilization of conjugated diene polymers from the adverse effects of ultraviolet radiation employing a mixture of a diaryl hydroxylamine, 2,6-di-tert-butyl-4-methylphenol, 1,3,5-trimethyl-2,4,6-tris(3,5-di-tert-butyl-4 hydroxylbenzyl)benzene, dilaurylthiodipropionate and lignin sulfonate.

U.S. Patent Nos. 3,567,664 and 3,637,865 each describes the stabilization of polyether polyol-based polyurethanes against scorching employing a mixture of 2,6-ditertiary-butyl-4-methyl phenol and a p,p′-dialkyl diphenylamine. Similarly, U.S. Patent No. 4,007,230 describes the stabilization of polyether polyol-based polyurethanes against scorching employing a composition consisting of certain hindered phenols such as 2,4-dimethyl-6-octyl phenol and 4,4′-bis(alpha, alpha-dimethylbenzyl)diphenylamine (i.e., NAUGARD 445, Uniroyal Chemical, referred to supra).

U.S. Patent No. 3,655,559 discloses stabilizers for synthetic lubricants based on alkylated diphenylamines and, optionally, any one of numerous other kinds of antioxidants, sterically hindered phenols amongst them.

U.S. Patent No. 3,979,180 describes the stabilization of low density polyethylene and mineral-filled ethylene vinyl acetate copolymers employing a combination of a sterically hindered phenol and/or a substituted diphenylamine of the structure Ar-NH-Ar′ where Ar and Ar′ are each phenyl, naphthol, substituted phenyl and naphthol including alkyl substituents of 1-20 alkyl carbon atoms, and halogen, a metal organic thiophosphorus compound and a trace amount of a transition metal salt.

U.S. Patent No. 4,341,677 describes oil-in-water emulsions of antioxidants useful for treating fibrous reinforcements such as glass fibers to increase the protection of such fiber reinforces polymeric materials as polyolefins, polyurethanes, polyamides, polyesters, polycarbonates, polyacetals, polystyrene and styrene copolymers against chemical degradation. The emulsions are based on hindered phenols such as octadecyl 3-(3′-5′-di-tert-butyl-4-hydroxyphenyl)propionate (IRGANOX 1076, Ciba Geigy) and/or diarylamines such as 4,4′-[2-(2-phenyl)-propyl]diphenylamine (NAUGARD 445, Uniroyal Chemical, referred to supra). All of the specific examples of emulsions disclosed to be useful in U.S. Patent No. 4,341,677 are based either on a sterically hindered phenol or a diarylamine. No example of an emulsion containing both a hindered phenol and a diarylamine is provided.

U.S. Patent No. 4,420,579 describes antioxidant compositions for polyolefins based on coordination complexes of nickel thiobis(alkylphenolates) with hydroxy-substituted ligands in combination with co-additives such as diarylamines and/or hindered phenols.

U.S. Patent No. 4,440,671 describes mixtures of hydrocarbon-substituted diphenyl amines, e.g., a liquid diphenylamine alkylated with styrene (WINGSTAY 29, Goodyear Tire and Rubber Company) and high molecular weight polyethylene glycols as water-tree retardant compositions for polyethylenes. The compositions can optionally contain antioxidants such as stearically hindered phenols and amines, polymerized 2,2,4-tetramethylhydroquinoline, 4′4′-thio-bis-(6-tert-butyl-3-methylphenol), thiodiethylenebis-(3,5-ditert-butyl-4-hydroxy) hydroccinnamate, distearylthiodipropionate.

In accordance with the present invention, there is provided a polypropylene composition stabilised against oxidative degradation comprising polypropylene having incorporated therein a stabilizing amount of an antioxidant composition of:

(a) at least one aralkyl-substituted diarylamine selected from the group consisting of 4,4'-bis-(alpha,alpha-dimethylbenzyl)diphenylamine and 4,4'-bis-(alpha-methyl-alpha-phenylbenzyl) diphenylamine;

(b) at least one 3,5 di-tertiarybutyl substituted phenol selected from the group consisting of tetrakis-(methylene (3,5-di-tertiarybutyl-4-hydroxy-hydrocinnamate)methane, octadecyl-3,5-di-tertiarybutyl-4-hydroxyhydrocinnamate, and 1,3,5-trimethyl-2,4,6-tris(3,5-ditertiarybutyl-4-hydroxybenzyl)benzene.

The substituted diphenylamines have the formula:

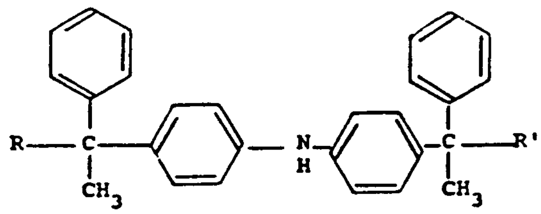

where R and R' are methyl or phenyl. The compound wherein R and R' are methyl is 4,4'-bis-(alpha,alpha-dimethylbenzyl)diphenylamine and the compound in which R and R' are phenyl is 4,4'-bis(alpha-methyl-alphaphenylbenzyl)diphenylamine ([4,4'-bis-(alphamethylbenzhydryl)diphenylamine]).

The polypropylene homopolymers, copolymers and blends thereof can be combined with minor amounts by weight, ie, less than about 50 weight percent and preferably less than about 20 weight percent, of one or more compatible or compatibilized polymers other than those mentioned, eg, polyvinylhalides, chlorinated polyolefins, polyesters, polyamides, polyacrylates.

The combined amounts of aralkyl-substituted diarylamine(s) and sterically hindered phenol(s) incorporated into the foregoing polyolefins will, at a minimum, be that required to impart a significant level of stability against oxidative degeneration. In general, such amounts can vary from about 0.01 to about 5.0, and preferably from about 0.5 to about 1, weight percent of polyolefin homopolymer, copolymer or polyolef in blend. Although combined amounts of the antioxidants in excess of about 5 weight percent can be employed, such amounts might have a deleterious effect on the physical and mechanical properties of the polyolefin substrate in which case they should ordinary be avoided.

The relative proportions of aralkyl-substituted diarylamine(s) to sterically hindered phenol(s) can vary widely. In general, the ratios of aralkyl-substituted diarylamine(s) to sterically hindered phenol(s) can vary from about 20:1 to about 1:20 and preferably from about 10:1 to about 1:10 although ratios somewhat above and below the broader of these ranges can also be used with advantageous results.

The procedure employed to incorporate the aralkyl-substituted diarylamine(s) and the sterically hindered phenol(s) into the polyolefin is not critical and can, in fact, be any of those procedures disclosed in the prior U.S. patents. For example, these materials can be introduced into the polyolefin as a premix or they can be maintained separately and added to the polyolefin simultaneously or sequentially and then homogeneously distributed throughout the polymer by milling, extrusion blending or some other mechanical working procedure. Either the aralkyl-substituted diarylamine component(s), the sterically hindered phenol component(s) or both can be added to the polyolefin by way of a preconcentrate or in a carrier system, e.g., in a suitable solvent or co-solvent.

Following common practice, other additives can be introduced into the polyolefin prior to, during and/or following addition of the antioxidants. Such additives include other stabilizers, colorants, reinforcements, fillers, antistatic agents, lubricants, plasticizers, and the like, present in the customary amounts.

The following examples are illustrative of polyolefins stabilized against oxidative degradation by incorporation of a combination of aralkyl-substituted diarylamine(s) and sterically hindered phenol(s) in accordance with this invention.

## EXAMPLES 1-12

These examples demonstrate the effect of substituting half the weight of the sterically hindered phenol and antioxidants octadecyl-3,5,di-tert-butyl-4-hydroxy hydrocinnamate (NAUGARD 76, Uniroyal Chemical), tetrakis[methylene(3,5-di-tert-butyl-4-hydroxy-hydrocinnamate)]methane (NAUGARD 10, Uniroyal Chemical), 2,2′-oxamido bis-[ethyl-3-(3,5-di-tert-butyl-4-hydroxyphenyl) propionate (NAUGARD XL-1, Uniroyal Chemical), 1,3,5-trimethyl-2,4,6-tris(3,5-di-tert-butyl-4-hydroxybenzyl) benzene (ETANOX 330, Ethyl Corp.) and 1,3,5-tris(4-tert-butyl-3- hydroxy-2,6-dimethylbenzyl)-s-triazine-2,4,6-(1 H, 3H, 5H) trione (CYANOX 1790, American Cyanamid Co.) with an equal amount by weight of the aralkyl-substituted diarylamine antioxidant 4,4′-bis(alpha,alpha-dimethylbenzyl) diphenylamine (NAUGARD 445, Uniroyal Chemical) on both the melt stability and color stability of polypropylene homopolymer (PRO-FAX 6501, Hercules, Inc.) containing 0.1%

by weight of calcium stearate as an acid scavenger.

The foregoing antioxidants/antioxidant compositions were incorporated into the resin in a C.W. Brabender Plasticorder with mixing head attachment and operated for 30 minutes at 25 rpm and a temperature of 210 °C.

The effect of the foregoing substitutions on the melt stability of the polypropylene samples (measured as the melt flow rate at 230 °C. and 2.16 kg in accordance with ASTM D 1238, Condition L and on the color stability (measured as Hunter b Color carried out upon 65 mil (1,651mm) plaques) are set forth below as follows:

**TABLE I**

**MELT AND COLOR STABILITIES OF POLYPROPYLENE CONTAINING STERICALLY HINDERED PHENOL AND/OR ARALKYL-SUBSTITUTED DIARYLAMINE ANTIXOIDANTS**

| Example | Phenolic Component/ wt. % | NAUGARD 445, wt. % | Melt Flow Rate (g/10 Min.) | Color Stability (Hunter b Color) |
|---|---|---|---|---|
| 1 | - | - | 13.8 | 2.9 |
| 2 | NAUGARD 76/0.2 | - | 4.2 | 10.7 |
| 3 | NAUGARD 76/0.1 | 0.1 | 2.1 | 6.0 |
| 4 | NAUGARD 10/0.2 | - | 3.5 | 12.5 |
| 5 | NAUGARD 10/0.1 | 0.1 | 1.9 | 4.1 |
| 6 | NAUGARD XL-1/0.2 | - | 4.0 | 18.7 |
| 7 | NAUGARD XL-1/0.1 | 0.1 | 2.1 | 9.2 |
| 8 | ETHANOX 330/0.2 | - | 3.6 | 10.8 |
| 9 | ETHANOX 330/0.1 | 0.1 | 2.2 | 5.6 |
| 10 | CYANOX 1790/0.2 | - | 1.9 | 14.2 |
| 11 | CYANOX 1790/0.1 | 0.1 | 2.0 | 13.8 |
| 12 | - | 0.2 | 5.3 | 8.5 |

As these data show, both phenolic and antioxidants used alone (Examples 2, 4, 6, 8 and 10) and aralkyl-substituted diarylamine antioxidant used alone (Example 12) resulted in a dramatic increase in stabilization as indicated by a lower melt flow rate compared to the unstabilized polypropylene (Example 1). In all but one of these examples (Example 11), substitution of half the weight of phenolic antioxidant component with aralkyl-substituted diarylamine antioxidant component resulted in still a further sharp reduction in melt flow rate (Examples 3, 5, 7 and 9). These data clearly show the enhanced stabilizing effect of a combination of aralkyl-substituted diarylamine, and sterically hindered phenol(s) compared to stabilization achieved with either material by itself.

Similarly, where color stability is concerned, in all but one case (Example 11), substitution of a part of the phenolic antioxidant with an equal weight amount of aralkyl-substituted diarylamine resulted in a very large increase in color stability (observed as reduced levels of Hunter b color), this being another indication of the enhanced stabilizing effect of mixtures of aralkyl-substituted diarylamine(s) and sterically hindered phenol(s) on polyolefins.

EXAMPLES 13-18

The following examples show the strikingly improved polymer stability realized when the phenolic/amine antioxidant compositions of the instant invention are incorporated in a base resin compared to the more common phenolic/phenolic antioxidant blends of the prior art, specifically illustrated by using NAUGARD 10 as one of the phenolic antioxidants.

The compositions were prepared and tested in substantially the samer manner as those in Example 1-12 and the data realized are set forth in Table II below. The NAUGARD 10 when used along was at a weight percent of 0.2 and when in combination, each antioxidant was present at 0.1 wt %, both weight percents being based on the total composition weight.

TABLE II

MELT AND COLOR STABILITIES OF POLYPROPYLENE WITH:
A) PHENOL/PHENOL ANTIOXIDANTS AND
B) SPECIFIC PHENOL/AMINE ANTIOXIDANTS

| Example | Phenolic Component No. 1 | Phenolic Component No. 2 or NAUGARD 445 | Melt Flow Rate (g/10 Min.) | Color Stability (Hunter b Color) |
|---|---|---|---|---|
| 13 | NAUGARD 10 | - | 3.5 | 12.5 |
| 14 | NAUGARD 10 | NAUGARD 1076 | 4.1 | 16.6 |
| 15 | NAUGARD 10 | NAUGARD XL-1 | 3.4 | 17.7 |
| 16 | NAUGARD 10 | ETHANOX 330 | 3.2 | 16.9 |
| 17 | NAUGARD 10 | CYANOX 1790 | 2.3 | 13.1 |
| 18 | NAUGARD 10 | NAUGARD 445 | 1.9 | 4.1 |

## Claims

1. A polypropylene composition stabilized against oxidative degradation comprising polypropylene having incorporated therein a stabilizing amount of an antioxidant composition of:
   (a) at least one aralkyl-substituted diarylamine selected from the group consisting of 4,4'-bis-(alpha,alpha-dimethylbenzyl)diphenylamine and 4,4'-bis-(alpha-methyl-alpha-phenylbenzyl) diphenylamine;
   (b) at least one 3,5 di-tertiarybutyl substituted phenol selected from the group consisting of tetrakis-[methylene (3,5-di-tertiarybutyl-4-hydroxyhydrocinnamate)]methane, octadecyl-3,5-di-tertiarybutyl-4-hydroxyhydrocinnamate, and 1,3,5-trimethyl-2,4,6-tris(3,5-di-tertiarybutyl-4-hydroxybenzyl)benzene.

2. The polypropylene composition of claim 1 wherein said 3,5-di-tertiarybutyl substituted phenol is tetrakis[methylene(3,5-di-tertiarybutyl-4-hydroxyhydrocinnamate)]methane.

3. The polypropylene composition of claim 1 wherein said antioxidant composition is present at about 0.01 to about 5.0 parts by weight based on the weight of the polypropylene.

4. The polypropylene composition according to claim 1 wherein said aralkyl-substituted diarylamine is 4,4'bis(alpha,alpha dimethylbenzyl)diphenylamine.

## Patentansprüche

1. Polypropylen-Mischung, die gegen oxidativen Abbau stabilisiert ist und Polypropylen enthält, in das eine stabilisierende Menge einer Antioxidationsmittelmischung aus
   (a) mindestens einem aralkylsubstituierten Diarylamin, das aus der Gruppe ausgewählt ist, die aus 4,4'-Bis(alpha,alpha-dimethylbenzyl)diphenylamin und 4,4'-Bis(alpha-methyl-alpha-phenylbenzyl)-diphenylamin besteht, und
   (b) mindestens einem 3,5-di-tert.-butylsubstituierten Phenol, das aus der Gruppe ausgewählt ist, die aus Tetrakis[methylen-(3,5-di-tert.-butyl-4-hydroxyhydrocinnamat)]methan, Octadecyl-3,5-di-tert.-butyl-4-hydroxyhydrocinnamat und 1,3,5-Trimethyl-2,4,6-tris(3,5-di-tert.-butyl-4-hydroxybenzyl)benzol besteht,
   eingemischt ist.

2. Polypropylen-Mischung nach Anspruch 1, bei der das erwähnte 3,5-di-tert.-butylsubstituierte Phenol Tetrakis[methylen-(3,5-di-tert.-butyl-4-hydroxyhydrocinnamat)]methan ist.

3. Polypropylen-Mischung nach Anspruch 1, bei der die erwähnte Antioxidationsmittelmischung in einer auf die Masse des Polypropylens bezogenen Menge von etwa 0,01 bis etwa 5,0 Masse% vorhanden ist.

4. Polypropylen-Mischung nach Anspruch 1, bei der das erwähnte aralkylsubstituierte Diarylamin 4,4'-Bis-(alpha,alpha-dimethylbenzyl)diphenylamin ist.

## Revendications

1. Composition de polypropylène stabilisée contre une dégradation oxydative, comprenant du polypropylène où est incorporée une quantité stabilisante d'une composition antioxydante de :
   (a) au moins une diarylamine aralkyle-substituée choisie dans le groupe consistant en 4,4'-bis-(alpha,alpha-diméthylbenzyl)diphénylamine et 4,4'-bis-(alpha-méthyl-alpha-phényl benzyl)-diphénylamine ;
   (b) au moins un phénol 3,5-di-butyle-tertiaire-substitué choisi dans le groupe consistant en tétrakis-(méthylène (3,5-di-butyl-tertiaire-4-hydroxyhydrocinnamate)-méthane, octadécyl-3,5-di-butyl-tertiaire-4-hydroxyhydrocinnamate et 1,3,5-triméthyl-2,4,6-tris(3,5-di-butyltertiaire-4-hydroxybenzyl)benzène.

2. Composition de polypropylène de la revendication 1, où ledit phénol 3,5-di-butyle tertiaire substitué est tétrakis-[méthylène(3,5-di-butyl-tertiaire-4-hydroxyhydrocinnamate)]méthane.

3. Composition de polypropylène de la revendication 1, où ladite composition antioxydante est présente à raison d'environ 0,01 à environ 5,0 parties en poids en se basant sur le poids du polypropylène.

4. Composition de polypropylène selon la revendication 1, où ladite diarylamine aralkyle-substituée est la 4,4'bis(alpha,alpha-diméthylbenzyl)diphénylamine.